# EUROPÄISCHE PATENTSCHRIFT

(11) **EP 1 567 320 B1**
(45) Veröffentlichungstag und Bekanntmachung des Hinweises auf die Patenterteilung: **19.04.2006**
(21) Anmeldenummer: 03782106.3
(22) Anmeldetag: 25.11.2003
(51) Int. Cl.: B29C 49/22

(54) **VERFAHREN ZUR HERSTELLUNG EINES BEHÄLTERS MIT WENIGSTENS EINER DRUCKAUSGLEICHSÖFFNUNG**
METHOD FOR PRODUCING A CONTAINER HAVING AT LEAST ONE VENT OPENING
PROCEDE DE FABRICATION D'UN CONTENANT COMPORTANT AU MOINS UNE OUVERTURE DE COMPENSATION DE PRESSION

(30) Priorität: 30.11.2002 DE 10256015
(43) Veröffentlichungstag der Anmeldung: 31.08.2005
(73) Patentinhaber: GAPLAST GmbH, D-82442 Altenau (DE)
(72) Erfinder: KNEER, Roland, 82491 Farchant (DE)
(74) Vertreter: Flosdorff, Jürgen
(86) Internationale Anmeldenummer: PCT/DE2003/003909
(87) Internationale Veröffentlichungsnummer: WO 2004/050328

(56) Entgegenhaltungen:
- EP-A- 0 182 094
- EP-A- 0 759 399
- EP-A- 0 924 047
- EP-A- 1 180 424
- DE-A- 10 017 443
- US-A- 4 585 152
- US-B1- 6 244 852
- US-B1- 6 276 558

## Beschreibung

Die Erfindung betrifft ein Verfahren zur Herstellung eines Behälters, der aus einem im wesentlichen steifen Außenbehälter und einem leicht verformbaren Innenbeutel besteht, die aus verschiedenartigen, keine Schweißverbindung miteinander eingehenden thermoplastischen Kunststoffen gebildet sind, gemäß dem Oberbegriff des Patentanspruchs 1.

Bei dem Verfahren der betrachteten Art wird zunächst ein Vorformling, der die den Innenbeutel und den Außenbehälter bildenden Schläuche enthält, coextrudiert und nachfolgend in einer Blasform zu dem fertigen Behälter aufgeblasen, wobei das Überschußmaterial am Boden des herzustellenden Behälters abgequetscht wird. Hierdurch wird die Bodennaht des Innenbeutels dicht verschweißt, und diese verschweißte Bodennaht wird durch besondere Formgebung des bodenseitigen Quetschbereichs der Blasform in der verschweißten Bodennaht des Außenbehälters eingeklemmt, wodurch der Innenbeutel in axialer Richtung am Boden des Außenbehälters gehalten ist.

Diese Ausbildung der verschweißten Bodennaht des Außenbehälters und das Einklemmen der bodenseitigen Schweißnaht des Innenbeutels sind in der DE 41 39 555 C2 beschrieben.

Zum Ausbringen des Behälterinhalts kann ein Behälter der betrachteten Art mit einer Pumpe versehen sein. Das Ausbringen des Behälterinhalts kann aber auch dadurch erfolgen, daß der Außenbehälter von Hand zusammengedrückt wird, woraufhin der Behälter dann nach erfolgtem Druckausgleich zwischen dem Innenbeutel und dem Außenbehälter in seine Ausgangsform zurückkehrt.

Bei dem Behälter gemäß der DE 41 39 555 C2 erfolgt der Druckausgleich, der durch die mit der Abgabe des Behälterinhalts verbundene Volumenverringerung des Innenbeutels erforderlich ist, durch unverschweißte Schulternähte des Außenbehälters. Dies kann Probleme bei der Anbringung einer Pumpe mit sich bringen. Außerdem können nur Behälter mit Schulterabschnitten mit solchen Druckausgleichsnähten versehen werden, während dies bei sogenannten Weithatsgefäßen auf die beschriebene Weise nicht möglich ist.

In der DE 197 37 964 C2 wird ein Verfahren zur Herstellung eines Behälters mit wenigstens einer Druckausgleichsöffnung offenbart, bei dem ein Messer, das in einem flachen Winkel auf einen gewölbten Umfangsabschnitt des Außenbehälters auftrifft, einen Span von der Außenwand wegschneidet, wodurch eine etwa elliptische oder linsenförmige Schnittfläche mit einem durch die Wand des Außenbehälters führenden Loch ausgebildet wird. Auch wenn das Messer dabei nach Durchdringen der Wand des Außenbehälters auf den Innenbeutel auftrifft, erfolgt dies in einem so flachen Winkel, daß der Innenbeutel ohne Beschädigung zurückweicht. Dieses Verfahren hat sich in der Praxis bewährt, hat jedoch den Nachteil, daß eine verhältnismäßig große Schnittfläche ausgebildet wird, die bei einem Benutzer den Eindruck hervorrufen könnte, der Behälter sei schadhaft, wenn die Öffnung nicht von einem Pumpengehäuse überdeckt wird.

EP-A-0 759 399 offenbart ein Verfahren, bei dem eine rohrförmige Klinge in die Außenschicht des Halses eines Behälters gepreßt wird, um die Außenschicht zu durchlöchern.

US-B-6,244,8521 offenbart ein Verfahren, bei dem eine Wandöffnung dadurch ausgebildet wird, daß ein Schnitt oder eine Kerbe in die Wand des Außenbehälters geschnitten oder gestanzt wird, der bzw. die die Wand bis auf einen geringen restlichen Wandabschnitt durchdringt, wobei der restliche Wandabschnitt durch Krafteinwirkung geöffnet wird. Dies wird dadurch bewerkstelligt, daß eine Messerklinge auf einem solchen Radius verschwenkt wird, daß hierbei im Schulterbereich des Behälters ein Schnitt durch die Wand des Außenbehälters ausgeführt wird.

EP-A-O 182 094 offenbart ein Verfahren, bei dem die Druckausgleichsöffnung des Außenbehälters dadurch gebildet ist, daß der Bodenbereich des Behälters so abgequetscht wird, daß eine unverschweißte Bodennaht an dem Außenbehälter entsteht.

Der vorliegenden Erfindung liegt die Aufgabe zugrunde, ein Verfahren anzugeben, mit dem die wenigstens eine Druckausgleichsöffnung auf einfache Weise ausgebildet werden kann und kaum in Erscheinung tritt.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, daß die wenigstens eine Wandöffnung durch ein oszillierendes Werkzeug ausgebildet wird. Das oszillierende Werkzeug kann an beliebiger Stelle des Außenbehälters an dessen Wand angesetzt werden und - während es bevorzugt in Querrichtung oszilliert - durch die Wand hindurch vorgeschoben werden, wobei Material der Wand in feinen staubartigen Partikeln abgetragen wird. Der sich bildende Staub kann durch eine geeignete Vakuumeinrichtung an der Bearbeitungsstelle abgesaugt werden. Das oszillierende Werkzeug bildet in der Wand des Außenbehälters bevorzugt einen länglichen, gegebenenfalls bogenförmigen Schlitz aus, der so schmal sein kann, daß er für einen flüchtigen Betrachter praktisch nicht wahrnehmbar ist. Die Breite des Schlitzes kann beispielsweise 2-3 mm betragen.

Das Werkzeug kann auch eine oszillierende Drehbewegung ausführen, also mit einer hohen Schwingungszahl abwechselnd im Uhrzeigersinn und Gegenuhrzeigersinn oszillieren, so daß in der Wand ein kreisförmiges Loch ausgebildet wird.

Das Werkzeug, bei dem es sich bevorzugt um ein mit Zähnen versehenes Sägeblatt oder eine spitz zulaufende Trennscheibe handelt, kann beispielsweise mit etwa 10.000 bis 20.000 Schwingungen/Minute oszillieren, ohne daß die Erfindung hierauf beschränkt ist.

Es sind auch andere oszillierende Werkzeuge einsetzbar, beispielsweise ein Draht mit einer rauhen/unebenen Oberfläche, ein Stab mit einer rauhen/unebenen Stirnfläche oder ein mit Diamanten besetztes Trennwerkzeug.

Das oszillierende Werkzeug trifft nach dem vollständigen Durchgang durch die Wand des Außenbehälters auf den Innenbeutel auf. Dabei hat sich überraschenderweise herausgestellt, daß der Innenbeutel durch das oszillierende Werkzeug nicht verletzt bzw. beschädigt wird, obwohl es in Kontakt mit dem oszillierenden Werkzeug gelangt.

Mit dem erfindungsgemäßen Verfahren können die Druckausgleichsöffnungen auf einfache Weise mit sehr geringem Zeitaufwand ausgebildet werden, da weder die betreffende Stelle bzw. Stellen zur Ausbildung der Druckausgleichsöffnung noch die Schneidtiefe des Werkzeugs kritisch sind. Zudem sind oszillierende Werkzeuge kostengünstig erhältlich.

Nach einem weiteren Vorschlag der Erfindung besteht der Innenbeutel bevorzugt aus PE oder einem lonomer auf PE-Basis oder einer mehrschichtigen Materialkombination, während der Außenbehälter bevorzugt aus PET besteht. Bei dieser Materialkombination ist die Haftung des Innenbeutels an dem Außenbehälter minimal, so daß es - im Gegensatz zu anderen Materialkombinationen - nicht erforderlich ist, nach Herstellung des fertigen Behälters den Innenbeutel durch Aufbringung eines Vakuums zunächst von dem Außenbehälter abzulösen, bevor der Innenbeutel anschließend durch Einführen von Druckluft wieder in seine Ausgangsform gebracht wird. Wenn die obige erfindungsgemäße Materialkombination verwendet wird, kann der Behälter ohne vorheriges Ablösen des Innenbeutels mit der Behälterflüssigkeit gefüllt werden, wobei sich bei dem nachfolgenden Ausbringen des Behälterinhalts der Innenbeutel glatt von dem Außenbehälter ablöst.

Die Erfindung sieht demnach ein einfaches, kostengünstiges Verfahren vor, mit dem an einem Behälter der betrachteten Art praktisch an beliebiger Stelle eine oder mehrere kaum in Erscheinung tretende Druckausgleichsöffnungen ausgebildet werden können, ohne daß die Gefahr einer Beschädigung des Innenbeutels besteht.

Weitere Einzelheiten der Erfindung ergeben sich aus der nachfolgenden Beschreibung sowie anhand der Zeichnung. Dabei zeigen:
- Figur 1: eine perspektivische Darstellung eines Behälters, bei dem ein oszillierendes Werkzeug am Halsbereich angesetzt ist;
- Figur 2: eine Aufsicht auf die Anordnung gemäß Figur 1;
- Figuren 3 und 4: schematische Darstellungen des Vorschubs des oszillierenden Werkzeugs zur Ausbildung einer Druckausgleichsöffnung.

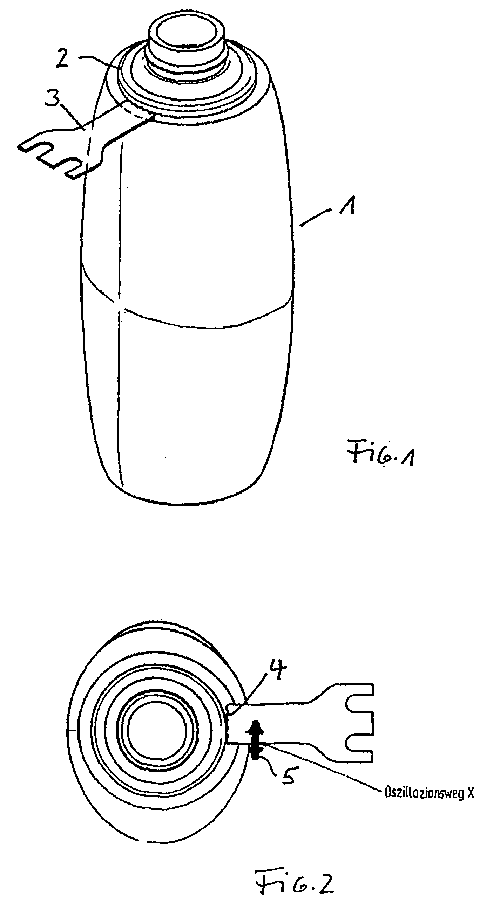

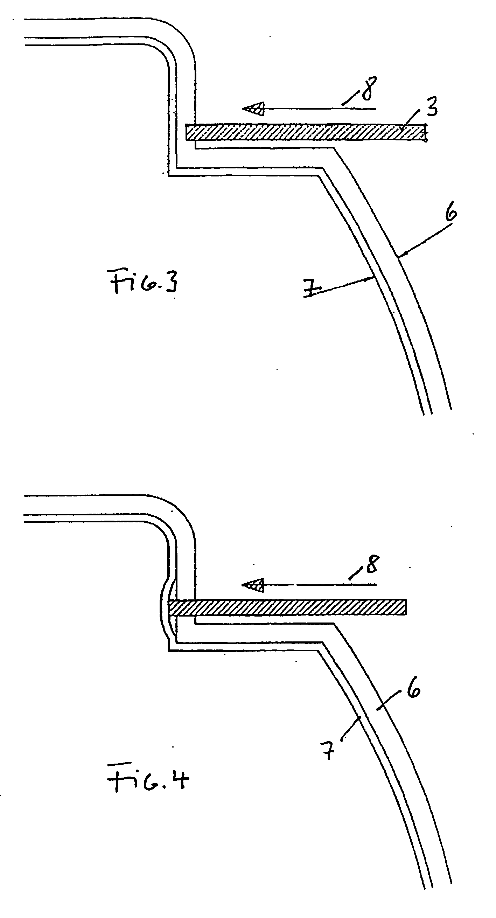

In Figur 1 ist ein leicht bauchiger Behälter 1 dargestellt, an dessen Schulterbereich 2 ein oszillierendes Werkzeug in Form eines Sägeblatts 3 mit stirnseitigen kleinen Zähnen 4 angesetzt ist. Das Sägeblatt 3 wird von einer nicht dargestellten Betätigungseinrichtung in seitliche Schwingungen versetzt, die in Figur 2 durch den Pfeil 5 angedeutet sind.

Wie die Figuren 3 und 4 zeigen, besteht der Behälter aus einer im wesentlichen steifen Außenflasche 6 und einem anliegenden Innenbeutel 7 aus einem weichen Kunststoff.

Das Sägeblatt 3 wird - wie die Figuren 3 und 4 schematisch zeigen - in Richtung eines Pfeils 8 durch die Wand der Außenflasche 6 hindurch vorgeschoben. Nach Durchgang durch die Wand der Außenflasche 6, bei dem eine schlitzförmige Öffnung in der Wand der Außenflasche 6 erzeugt wird, trifft das Sägeblatt auf den Innenbeutel 7 auf, der ohne Beschädigung nach innen ausweicht.

## Patentansprüche

1. Verfahren zur Herstellung eines Behälters (1), der aus einem im wesentlichen steifen Außenbehälter (6) und einem leicht verformbaren Innenbeutel (7) aus verschiedenartigen, keine Schweißverbindung miteinander eingehenden thermoplastischen Kunststoffen besteht, mit einer Behüheröffnung und wenigstens einer Wandöffnung in dem Außenbehälter, durch die ein Druckausgleich In dem Bereich zwischen dem Innenbeutel und dem Außenbehälter erfolgt, wobei ein aus wenigstens zwei Schläuchen bestehender Vorformling koextrudiert und zwischen den geöffneten Hälftn einer Blasform angeordnet wird, die Blasform anschließend geschlossen wird, wenn der Vorformling die zur Herstellung des Behälters erforderliche Länge hat, wobei Überschussmaterial im Bodenbereich des herzustellenden Behälters abgequetscht und ein Steg aus verschweißtem Material des Außenbehälters ausgebildet wird, in dem die verschweißte Bodennaht des Innenbeutels eingeklemmt und in axialer Richtung gehalten ist und der Vorformling durch ein Druckrnedium zur Anlage an die Wand der Blasform aufgeblasen und aus der Blasform entnommen wird,
**dadurch gekennzeichnet, dass** die wenigstens eine Wandöffnung durch ein oszilllerendes Werkzeug (3) ausgebildet wird, das an der Wand des Außenbehälters angesetzt und durch die Wand hindurch vorgeschoben wird, wobei als Werkzeug ein mit Zähnen versehenes Sägeblatt oder ein mit Diamanten besetztes Trennwerkzeug oder eine spitz zulaufende Trennscheibe oder ein Draht mit einer rauen Oberfläche oder ein Stab mit einer rauen Stirnfläche verwendet wird.

2. Verfahren nach Anspruch 1,
**dadurch gekennzeichnet,**
**dass** das Werkzeug mit etwa 10.000 bis 20.000 Schwingungen/Minute oszilliert.

3. Verfahren nach einem der Ansprüche 1 bis 2,
**dadurch gekennzeichnet,**
**dass** die Wandöffnung die Form eines länglichen Schlitzes mit perallelen Begrenzungswänden oder eine Bogenform hat.

## Claims

1. Method of producing a container (1) which comprises a substantially rigid outer container (6) and an easily deformable inner bag (7) made from different thermoplastic plastics materials which do not form a welded joint, with a container opening and at least one wall opening in the outer container through which an equalisation of pressure takes place in the region between the inner bag and the outer container, wherein a perform comprising at least two tubes is coextruded and disposed between the opened halves of a blow mould, the blow mould is then closed, when the perform has reached the length necessary for the production of the container, whereby excess material is squeezed off in the base region of the container to be produced and a flange of welded material of the outer container is formed in which the welded base seam of the inner bag is gripped and is retained in the axial direction and the perform is inflated by a pressure medium until it rests against the wall of the blow mould and is removed from the blow mould, **characterised in that** the at least one wall opening is formed by an oscillating tool (3) which is placed on the wall of the outer container and is advanced through the wall, wherein the tool used may be a saw blade provided with teeth or a parting tool provided with diamonds or a tapered cutting wheel or a wire with a rough surface or a bar with a rough end face.

2. Method as claimed in Claim 1, **characterised in that** the tool oscillates at approximately 10,000 to 20,000 oscillations per minute.

3. Method as claimed in any one of Claims 1 to 2, **characterised in that** the wall opening has the shape of an elongate slot with parallel boundary walls or a curved shape.

## Revendications

1. Procédé pour la fabrication d'un contenant(1), qui est constitué d'un contenantextérieur (6) sensiblement rigide et d'un sachet intérieur (7) facilement déformable à base de plastiques thermoplastiques de types différents, ne nécessitant pas un assemblage soudé entre eux, avec une ouverture de contenant et au moins une ouverture de paroi dans le contenant extérieur, par laquelle on a une compensation de pression dans la zone située entre le sachet extérieur et le contenant extérieur, une préforme composée d'au moins deux flexibles étant co-extrudée et disposée entre les moitiés ouvertes d'un moule de soufflage, le moule de soufflage étant fermé ensuite, lorsque la préforme a la longueur nécessaire pour la fabrication du récipient, du matériau excédentaire étant écrasé dans la zone du fond du contenant à fabriquer et une baguette à base de matériau soudé du contenant extérieur étant formée, dans laquelle le cordon de fond soudé du sachet intérieur est coincé et maintenu dans la direction axiale et la préforme est prélevée par un fluide de pression pour l'appui sur la paroi du moule de soufflage et est prélevée du moule de soufflage,
**caractérisé en ce que**
la au moins une ouverture de paroi est réalisée par un outil (3) oscillant, qui est placé sur la paroi du contenant extérieur et est avancé à travers la paroi, une lame de scie dotée de dents ou un outil à tronçonner doté de diamants ou une meule de tronçonnage de forme conique ou un fil avec une surface rugueuse ou une tige avec une face avant rugueuse étant utilisé.

2. Procédé selon la revendication 1,
**caractérisé en ce que**
l'outil oscille avec environ 10.000 à 20.000 oscillations/minute.

3. Procédé selon l'une quelconque des revendications 1 à 2,
**caractérisé en ce que**
l'ouverture de paroi présente la forme d'une fente allongée avec des parois de délimitation parallèles ou une forme d'arc.
